# EUROPÄISCHE PATENTANMELDUNG

(11) **EP 0 577 918 A2**
(43) Veröffentlichungstag der Anmeldung: **12.01.1994**
(21) Anmeldenummer: 93101254.6
(22) Anmeldetag: 28.01.1993
(51) Int. Cl.: F16C 27/06, B60K 17/24

(54) **Elastische Lagerung**

(30) Priorität: 27.06.1992 DE 422132
(71) Anmelder: Firma Carl Freudenberg, D-69469 Weinheim (DE)
(72) Erfinder: Bade, Karl Heinz, W-6942 Mörlenbach (DE); Schütz, Michael, W-6149 Rimbach (DE); Simuttis, Arnold, Dr., W-6550 Bad Kreuznach (DE)

(57) **Zusammenfassung**

Elastische Lagerung, umfassend einen inneren Ring (1) und einen den inneren Ring (1) mit radialem Abstand umschließenden äußerer Ring (2), wobei der Innen-(1) und der äußerer Ring (2) gemeinsam einen sich in axialer Richtung erstreckenden Spalt (3) begrenzen und durch einen im wesentlichen C-förmigen Zwischenring (4) aus elastisch nachgiebigem Werkstoff radialelastisch aufeinander abgestützt sind, wobei einem der Ringe (1, 2) ein innerhalb des Spalts (3) angeordneter Dämpfungskörper (5) aus gummielastischem Werkstoff zugeordnet ist und wobei zwischen dem Dämpfungskörper (5) und dem anderen Ring (2, 1) im schwingungsfreien Zustand ein radialer Abstand vorgesehen ist. Der Dämpfungskörper (5) ist durch wenigstens einen Anschlagpuffer (6) gebildet, der bezogen auf eine gedachte Radialebene (7) in axialer Richtung kegelförmig ausgebildet ist.

## Beschreibung

Die Erfindung betrifft eine elastische Lagerung, umfassend einen inneren Ring und einen den inneren Ring mit radialen Abstand umschließenden äußeren Ring, wobei der innere und der äußere Ring gemeinsam einen sich in axialer Richtung erstreckenden Spalt begrenzen und durch einen im wesentlichen C-förmigen Zwischenring aus elastisch nachgiebigem Werkstoff radialelastisch auf einander abgestützt sind, wobei einem der Ringe ein innerhalb des Spaltes angeordneter Dämpfungskörper aus gummielastischem Werkstoff zugeordnet ist und wobei zwischen dem Dämpfungskörper und dem anderen Ring im schwingungsfreien Zustand ein radialer Abstand vorgesehen ist.

Eine solche elastische Lagerung aus der DE-PS 23 47 446 bekannt. Die vorbekannte elastische Lagerung weist einen Dämpfungskörper auf, der als separater Dämpfungsring ausgebildet ist und gegenüber dem Zwischenring aus einem weicher- oder härter-elastischem Material gebildet ist und im Bereich seiner Sitzfläche mit einer Verstärkungseinlage versehen ist, wobei der Dämpfungsring mit einem Preßsitz auf dem inneren Ring der elastischen Lagerung festgelegt ist. Der Vorteil der vorbekannten Lagerung kann darin gesehen werden, daß die gewünschte Federcharakteristik in einfacher Weise den jeweiligen Erfordernissen angepaßt werden kann. Dabei ist allerdings zu beachten, daß die vorbekannte elastische Lagerung aus einer Vielzahl von separat zu montierenden Einzelteilen besteht, wodurch die Herstellbarkeit in wirtschaftlicher Hinsicht wenig befriedigend ist und sich die Montage vergleichweise kompliziert gestaltet.

Der Erfindung liegt die Aufgabe zugrunde, eine Lagerung der eingangs genannten Art derart weiterzuentwickeln, daß sich bei geringerem Fertigungs- und Montageaufwand gute Gebrauchseigenschaften ergeben und daß sich die Federcharakteristik der Lagerung ebenfalls in einfacher Weise an die jeweiligen Gegebenheiten des Anwendungsfalles anpassen läßt.

Diese Aufgabe wird erfindungsgemäß durch Anspruch 1 gelöst. Auf vorteilhafte Ausgestaltungen nehmen die Unteransprüche bezug.

Im Hinblick auf eine einfachere Fertigung durch weniger separat zu montierende Teile und die Möglichkeit, die Federcharakteristik herstellungsbedingt den jeweiligen Erfordernissen anpassen zu können, ist der Dämpfungskörper durch wenigstens einen Anschlagpuffer gebildet, der bezogen auf eine gedachte Radialebene in axialer Richtung kegelförmig ausgebildet ist. Durch die Anordnung des Dämpfungskörpers zwischen dem Spalt, der von dem inneren und dem äußeren, formstabilen Ring begrenzt wird, können die geforderten Feder- und Dämpfungskennwerte über die Neigung der Anschlagpuffer, bezogen auf die gedachte Radialebene, eingestellt werden. Je spitzer der Winkel, also je besser die Neigung des Anschlagpuffesr mit der Radialebene übereinstimmt, desto härter fällt die elastische Lagerung aus. Gleichzeitig kann außerdem die maximale Auslenkbewegung des inneren zum äußeren Ring durch die radiale Höhe des Anschlagpuffers eingestellt werden. Je größer der Winkel zwischen dem Anschlagpuffer 6 und der Radialebene 7 ist, desto weicher wird die Federcharakteristik, gleiches Material vorausgesetzt.

Der Anschlagpuffer kann beispielsweise durch einen innerhalb des Spalts umlaufenden Ringwulst gebildet sein. Hierbei ist von Vorteil, daß die Gebrauchseigenschaften während einer langen Gebrauchsdauer besonders vorteilhaft sind. Die Flächenpressung des Anschlagpuffers beim Anschlagen an den mit radialem Abstand benachbarten Ring ist vergleichsweise gering und gleichmäßig verteilt.

Nach einer anderen Ausgestaltung kann es vorgesehen sein, daß wenigstens drei gleichmäßig in Umfangsrichtung verteilte Anschlagpuffer vorgesehen sind. Hierbei ist von Vorteil, daß die elastische Lagerung ein vergleichsweise geringes Gewicht aufweist und in den meisten Teilbereichen des Zwischenrings unerwünschte Materialanhäufungen gummielastischen Werkstoffs vermieden werden und sich ein Entformen einfacher gestaltet, als bei einem ringförmig umlaufenden Wulst.

Im Rahmen der vorliegenden Erfindung hat es sich als vorteilhaft bewährt, wenn die Anschlagpuffer eine radiale Erstreckung aufweisen, die 0,25 bis 0,66-mal, bevorzugt 0,5-mal so groß ist, wie die radiale Spalthöhe, die durch den inneren und den äußeren Ring begrenzt wird. Die mechanischen Belastungen auf den C-förmigen Zwischenring können dadurch reduziert werden, daß Extremauslenkungen der beiden Ringe zueinander begrenzt werden, wodurch eine längere Gebrauchsdauer bei guten Gebrauchseigenschaften bedingt ist.

Gelangen in Umfangsrichtung beabstandete Anschlagpuffer zur Anwendung, können die Anschlagpuffer eine Umfangserstreckung aufweisen, die zumindest so groß ist, wie ihre Erstreckung in radialer Richtung. Eine übermäßige, mechanische Beanspruchung und ein möglicherweise vorzeitiger Ausfall der elastischen Lagerung kann dadurch zuverlässig verhindert werden.

Im Hinblick auf eine einfache, kostengünstige Herstellbarkeit der elastischen Lagerung ist es vorgesehen, die Anschlagpuffer einstückig mit dem Zwischenring ausgebildet sind. Eine zusätzliche Befestigung separat hergestellter Anschlagpuffer ist dadurch entbehrlich. Die Federeigenschaften werden in diesem Falle im wesentlichen durch die in axialer Richtung kegelförmig angeordneten Anschlagpuffer bestimmt. In Abhängigkeit von dem Winkel und den Abmessungen des Anschlagpuffers kann dieser auf die jeweiligen Gegebenheiten des Anwendungsfalles abgestimmt werden.

Die Anschlagpuffer können auch auf einem separat erzeugten Ringkörper angeordnet sein, wobei der Ringkörper kraft- und/oder formschlüssig auf dem Zwischenring befestigbar ist. Hierbei ist von Vorteil, daß die Anschlagpuffer bei auftretendem Verschleiß einfach auswechselbar sind, ohne daß aufwendige Reparaturen erfolgen müssen.

Im Hinblick auf gute Gebrauchseigenschaften haben sich Anschlagpuffer bewährt, die in Abhängigkeit von den jeweiligen Erfordernissen des Anwendungsfalles mit der gedachten Radialebene einen Winkel begrenzen, der 15 bis 75° beträgt.

Der Anschlagpuffer kann dem mit radialem Abstand benachbarten Ring im Bereich der Mitte seiner axialen Erstreckung benachbart zugeordnet sein, so daß auch bei Verlagerungen der Ringe in axialer Richtung zueinander die Funktionstüchtigkeit der Lagerung erhalten bleibt.

Eine verlängerte Gebrauchsdauer kann dadurch erreicht werden, daß die Anschlagpuffer aus der Radialebene in Richtung der axialen Öffnung des C-förmigen Zwischenrings geneigt angeordnet sind. Auch auftretende radiale Extremauslenkungen der beiden Ringe zueinander und einem Anschlagen des Anschlagpuffers an dem in radialer Richtung mit Abstand benachbarten Ring vermögen keine Beschädigung des Zwischenringes herbeizuführen. Die Anschlagpuffer legen sich bei Extremauslenkungen nicht in dem faltenbalgartigen Teilbereich des Zwischenringes an dessen Oberfläche an. Einen vorzeitigen Verschließ der elastischen Lagerung und einem anschließenden Ausfall wird dadurch vorgebeugt.

Im Hinblick auf eine weiter verlängerte Gebrauchsdauer können der Zwischenring und/oder die Anschlagpuffer zumindest teilweise mit einer Armierung versehen sein. Eine Armierung ist insbesondere im Scheitelbereich des C-förmigen Zwischenrings und im Bereich der Gelenkpunkte der Anschlagpuffer sinnvoll. Eine hohe Anzahl von Lastwechseln ohne Verschleißerscheinungen kann dadurch bewirkt werden.

Ein Ausführungsbeispiel der erfindungsgemäßen elastischen Lagerung wird nachfolgend anhand der Zeichnungen näher erläutert. Es zeigen:
Figur 1 einen Längsschnitt durch die elastische Lagerung nach der Erfindung und
Figur 2 eine stirnseitige Ansicht der in Figur 1 gezeigten Lagerung.

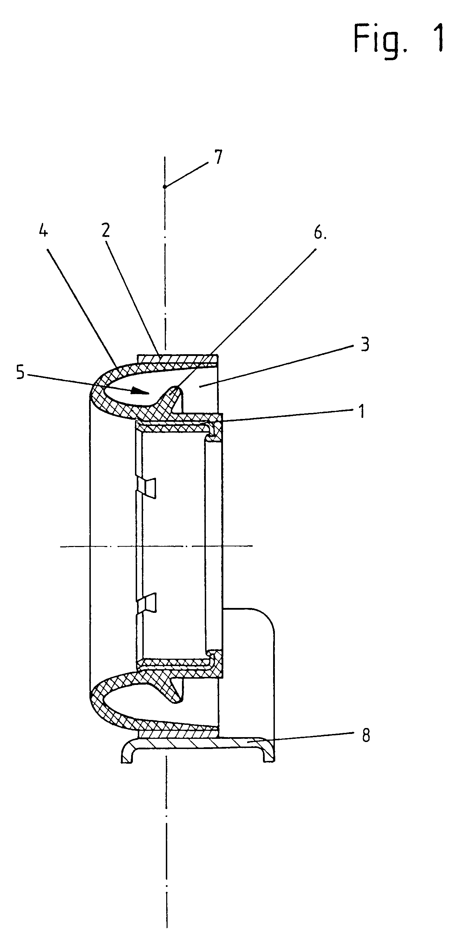

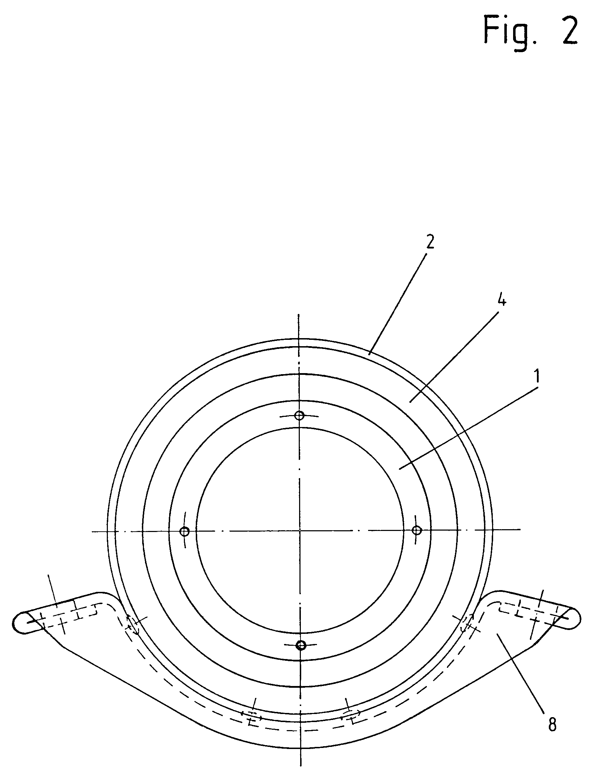

Die Figuren 1 und 2 zeigen eine elastische Lagerung, beispielsweise für das Mittellager einer Kardanwelle im Kraftfahrzeug. Die elastische Lagerung umfaßt einen starren inneren Ring 1 und einen starren äußeren Ring 2, die beispielsweise aus metallischem Werkstoff bestehen, wobei der innere und der äußere Ring 1, 2 durch einen C-förmigen Zwischenring 4 aus elastisch nachgiebigem Werkstoff elastisch aufeinander abgestützt sind. Innerhalb des Spaltes 3, der durch den Zwischenring 4 überbrückt ist, befindet sich ein Dämpfungskörper 5 in Form eines umfangsseitig umlaufenden Anschlagpuffers, der als Ringwulst ausgebildet ist. Der Anschlagpuffer 6 ist einstückig mit dem Zwischenring 4 ausgebildet und umschließt den inneren Ring 1 mit gummielastischem Werkstoff. Auf der dem Spalt 3 zugewandten Innenseite des äußeren Rings 2 ist der Zwischenring 4 adhäsiv festgelegt. Der Anschlagpuffer 6 schließt mit einer gedachten Radialebene 7 in diesem Ausführungsbeispiel einen Winkel von 35° ein. Der äußere Ring 2 ist mit einer Haltevorrichtung 8 verbunden, durch die die elastische Lagerung beispielsweise am Unterboden einer Kraftfahrzeugkarosserie befestigt werden kann. Der C-förmige Zwischenring 4 weist eine Erstreckung in axialer Richtung auf, die wenigstens 1,5-mal so groß ist, wie die axiale Erstreckung der in radialer Richtung beiderseits angrenzenden Ringe 1,2.

Die mechanische Belastung auf den Zwischenring 4 kann dadurch verringert werden. Der innere Ring 1 ist von dem elastomeren Material des Zwischenrings 4 in diesem Ausführungsbeispiel vollständig ummantelt, so daß sich für ein in die elastische Lagerung eingesetztes Wälzlager eine zusätzliche Schwingungsdämpfung/Schwingungsisolierung ergibt.

## Patentansprüche

1. Elastische Lagerung, umfassend einen innerer Ring und einen den innerer Ring mit radialem Abstand umschließenden äußerer Ring, wobei der Innere- und der äußerer Ring gemeinsam einen sich in axialer Richtung erstreckenden Spalt begrenzen und durch einen im wesentlichen C-förmigen Zwischenring aus elastisch nachgiebigem Werkstoff radialelastisch aufeinander abgestützt sind, wobei einem der Ringe ein innerhalb des Spalts angeordneter Dämpfungskörper aus gummielastischem Werkstoff zugeordnet ist und wobei zwischen dem Dämpfungskörper und dem anderen Ring im schwingungsfreien Zustand ein radialer Abstand vorgesehen ist, dadurch gekennzeichnet, daß der Dämpfungskörper (5) durch wenigstens einen Anschlagpuffer (6) gebildet ist, der bezogen auf eine gedachte Radialebene (7) in axialer Richtung kegelförmig ausgebildet ist.

2. Elastische Lagerung nach Anspruch 1, dadurch gekennzeichnet, daß der Anschlagpuffer (6) durch einen innerhalb des Spalts (3) umlaufenden Ringwulst gebildet ist.

3. Elastische Lagerung nach Anspruch 1, dadurch gekennzeichnet, daß wenigstens drei gleichmäßig in Umfangsrichtung verteilte Anschlagpuffer (6) vorgesehen sind.

4. Elastische Lagerung nach Anspruch 1 bis 3, dadurch gekennzeichnet, daß die Anschlagpuffer (6) eine radiale Erstreckung aufweisen, die 0,25 bis 0,66-mal so groß ist, wie die radiale Spalthöhe.

5. Elastische Lagerung nach Anspruch 3 bis 4, dadurch gekennzeichnet, daß die Anschlagpuffer (6) eine Umfangserstreckung aufweisen, die zumindest so groß ist, wie ihre Erstreckung in radialer Richtung.

6. Elastische Lagerung nach Anspruch 1 bis 5, dadurch gekennzeichnet, daß die Anschlagpuffer (6) einstückig mit dem Zwischenring (4) ausgebildet sind.

7. Elastische Lagerung nach Anspruch 1 bis 6, dadurch gekennzeichnet, daß die Anschlagpuffer (6)mit der gedachten Radialebene (7) einen Winkel begrenzen, der 15 bis 75° beträgt.

8. Elastische Lagerung nach Anspruch 1 bis 7, dadurch gekennzeichnet, daß die Anschlagpuffer (6) dem mit radialem Abstand benachbarten Ring (1, 2) im Bereich der Mitte seiner axialen Erstreckung zugeordnet sind.

9. Elastische Lagerung nach Anspruch 1 bis 9, dadurch gekennzeichnet, daß die Anschlagpuffer (6) aus der Radialebene (7) in Richtung der axialen Öffnung des Zwischenrings (4) geneigt angeordnet sind.

10. Elastische Lagerung nach Anspruch 9, dadurch gekennzeichnet, daß der Zwischenring (4) und/oder die Anschlagpuffer (6) zumindest teilweise mit einer Armierung versehen sind.
